Europäisches Patentamt

European Patent Office

Office européen des brevets

(19)

(11)  **EP 1 315 345 A1**

(12)  **DEMANDE DE BREVET EUROPEEN**

(43) Date de publication:
     **28.05.2003 Bulletin 2003/22**

(51) Int Cl.⁷: **H04L 25/02**, H04L 27/00

(21) Numéro de dépôt: **02292904.6**

(22) Date de dépôt: **22.11.2002**

(84) Etats contractants désignés:
     **AT BE BG CH CY CZ DE DK EE ES FI FR GB GR
     IE IT LI LU MC NL PT SE SK TR**
     Etats d'extension désignés:
     **AL LT LV MK RO SI**

(30) Priorité: **23.11.2001 FR 0115191**

(71) Demandeur: **Thales**
     **75008 Paris (FR)**

(72) Inventeur: **Laurent, Pierre Andre,**
     **Thales Intel. Property**
     **94117 Arcueil cedex (FR)**

(74) Mandataire: **Dudouit, Isabelle**
     **THALES Intellectual Property**
     **13, avenue Président Salvador Allende**
     **94117 Arcueil Cedex (FR)**

(54)  **Procédé et dispositif d'égalisation par blocs avec adaptation au canal de transmission**

(57)  Procédé et dispositif d'égalisation d'un signal reçu par un récepteur, ledit signal comportant au moins une séquence de données connue (ou probe) et un bloc de données situé entre une première probe Probe n-1 et une deuxième probe Probe n. Le procédé comporte une étape d'estimation de la rotation de phase θ du signal reçu entre la première probe Probe n-1 disposée avant le bloc de données à démoduler et la deuxième probe Probe n disposée après le bloc de données à démoduler.

Fig. 3

## Description

La présente invention concerne un procédé d'égalisation et un égaliseur adaptés notamment à des modems de type série, s'adaptant au canal de transmission.

Certains documents de normalisation internationale de procédés de transmission appelés STANAG (Standardization NATO Agreement en anglo-saxon) décrivent des formes d'ondes à utiliser pour des modems (modulateurs/démodulateurs) et destinées à être transmises sur des canaux étroits (3kHz en général) et de type série. Les symboles sont transmis séquentiellement à une vitesse de modulation généralement constante de 2400 bauds.

Le canal de transmission utilisé (gamme des Hautes Fréquences HF de 3 à 30 MHz) étant particulièrement perturbé et sa fonction de transfert évoluant relativement rapidement, toutes ces formes d'onde comportent à intervalles réguliers des signaux connus qui servent de références à partir desquelles la fonction de transfert du canal est déduite. Parmi les différents formats standardisés retenus, certains concernent des modems à haut débit, typiquement de 3200 à 9600 bits/s qui sont sensibles aux erreurs d'estimation du canal.

Pour obtenir un haut débit, il est indispensable, en plus d'utiliser une modulation complexe de type QAM (Quadrature Amplitude Modulation ) à nombreux états, de limiter au maximum la proportion de signaux de référence afin de maximiser le débit utile. En d'autres termes, la communication comportera des blocs de données de taille relativement grande entre lesquels seront insérés des signaux de référence de petite taille.

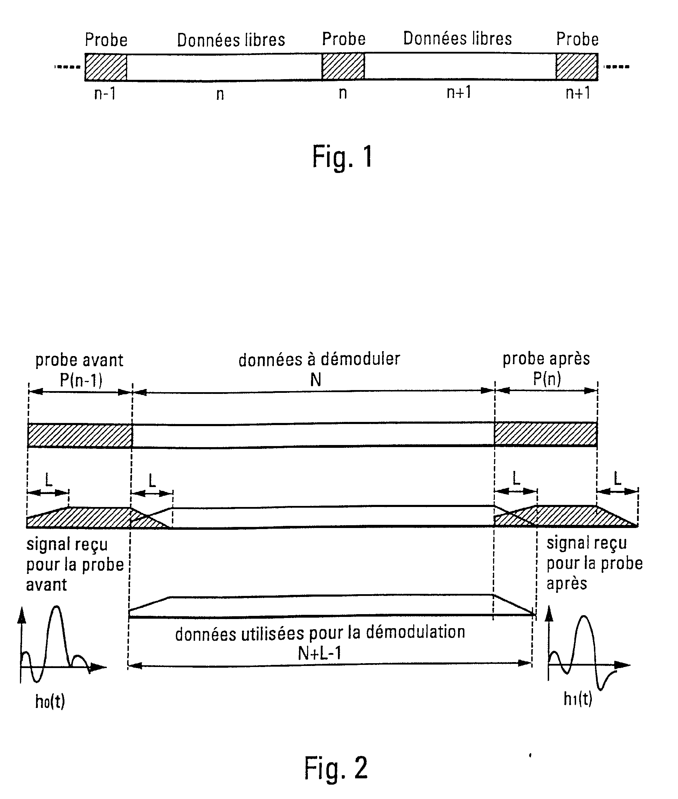

La figure 1 représente un exemple de structure d'un signal décrit dans le STANAG 4539 où l'on trouve en alternance, des blocs de 256 symboles de données avec insertion de blocs de 31 symboles connus (appelés « probe » ou référence), ce qui correspond à environ 11 % du total.

Pour évaluer la réponse impulsionnelle h(t) du canal au niveau du $n^{ème}$ bloc de données, on dispose d'une première probe (n-1) disposée avant le bloc de données et d'une deuxième probe (n) disposée après le bloc de données qui permettent d'évaluer la fonction de transfert du canal au travers de la réponse impulsionnelle combinée obtenue par la convolution de :

- la réponse impulsionnelle de l'émetteur, fixe,
- la réponse impulsionnelle du canal, éminemment variable,
- la réponse impulsionnelle du récepteur, fixe,
  ces trois éléments entrant en jeu pour définir le signal reçu à chaque instant.

Pour simplifier, dans la suite on supposera que cet ensemble forme la réponse impulsionnelle du canal.

Le DFE (Decision Feedback Equalizer en anglo-saxon) est couramment utilisé dans des modems correspondant par exemple à des STANAG (tels que le 4285) où la proportion des signaux de référence est relativement élevée et les blocs de données relativement courts (par exemple 32 symboles dans le 4285).

Une autre manière de procéder selon l'art antérieur est d'utiliser un algorithme dit « BDFE » (Block Décision Feedback Equalizer) qui revient à estimer la réponse impulsionnelle du canal avant et après un bloc de données et à trouver les valeurs de symboles émis (données émises) les plus vraisemblables qui minimiseront l'erreur quadratique moyenne entre le signal reçu et son estimation à partir d'une réponse impulsionnelle locale supposée connue.

Cet algorithme représenté à la figure 2 consiste notamment à exécuter les étapes suivantes :

a) estimer la réponse impulsionnelle h(t) de longueur L symboles,
b) connaissant cette réponse impulsionnelle estimée,
c) éliminer au début du bloc de données n comportant N symboles utiles, l'influence des symboles de la probe (n-1) placée devant (L-1 premiers symboles),
d) supprimer de la probe (n) placée après le bloc des données, la participation des symboles de la probe qui sont perturbés par l'influence des derniers symboles de données (L-1 symboles),
e) à partir des échantillons ainsi obtenus, dont le nombre est un peu plus grand que le nombre de symboles de données (à savoir N+L-1), estimer au mieux la valeur des N symboles utiles les plus probablement émis.

Le procédé habituellement connu et décrit dans l'art antérieur correspond donc en résumé aux étapes suivantes :

- estimer la réponse impulsionnelle du canal avant le bloc de données à démoduler
- estimer la réponse impulsionnelle du canal après le bloc de données
- éliminer l'influence du canal des signaux connus (étapes c et d) précitées
- exécuter l'étape e) en supposant que la réponse impulsionnelle du canal évolue régulièrement (par exemple linéairement) tout au long du bloc de données.

Ce procédé donne des performances satisfaisantes pour des canaux de transmission peu perturbés, qui ne varient pas trop rapidement.

Par contre, dès lors que le canal devient plus perturbé ou qu'il subsiste un léger décalage en fréquence du signal et lorsque l'on n'utilise pas un algorithme de décodage pondéré présentant comme inconvénient de nécessiter des puissances de calcul importantes, le niveau de performances requis n'est généralement plus atteint.

Le procédé selon l'invention et le BDFE associé repose notamment sur une nouvelle approche qui consiste notamment à estimer un décalage Doppler global résiduel valable seulement pour le bloc de données à démoduler et à pré-compenser ce décalage avant de mettre en oeuvre un algorithme BDFE ou l'équivalent connu de l'Homme du métier.

La description utilise certaines notations adoptées dont les suivantes :

> $e_n$ : échantillons complexes émis, espacés d'un symbole et appartenant à l'une des constellations mentionnées plus haut (connus ou inconnus),
> $r_n$ : échantillons complexes reçus, les valeurs de n seront explicitées à chaque fois, ces échantillons pouvant appartenir à une probe ou à des données,
> L : longueur de la réponse impulsionnelle, en symboles, du canal à estimer,
> P : le nombre de symboles d'une « probe » (nom anglais des séquences de référence),
> N : le nombre de symboles d'un bloc de données,
> $a_{-p},....a_{-1}$ : valeurs complexes connues des symboles d'une probe précédant un bloc de données,
> $b_0...b_{N-1}$ : valeurs complexes inconnues des symboles de donnés,
> $C_N...C_{N+P-1}$ : valeurs complexes des symboles d'une probe suivant un bloc de données,
> $d_0...d_{P-1}$ : valeurs complexes connues des symboles de référence, quelle que soit la probe concernée.

L'invention concerne un procédé d'égalisation d'un signal reçu par un récepteur, ledit signal comportant au moins une séquence de données connue (ou probe) et un bloc de données situé entre une première probe Probe n-1 et une deuxième probe Probe n caractérisé en ce qu'il comporte au moins une étape d'estimation de la rotation de phase θ du signal reçu entre le début du bloc de données et la fin du bloc de données.

La rotation de phase est par exemple estimée entre la première probe Probe n-1 disposée avant le bloc de données à démoduler et la deuxième probe Probe n disposée après le bloc de données à démoduler.

Il comporte par exemple une étape où la réponse impulsionnelle du canal est estimée d'une part en utilisant la première Probe n-1 et d'autre part en utilisant la deuxième probe n et une étape où l'on minimise la différence entre ces deux valeurs de réponse impulsionnelle estimée.

La différence entre les valeurs estimées de réponse impulsionnelle du canal s'exprime par exemple sous la forme :

$$E = \sum_{i=0}^{L-1} \left| h_i^{(N)} - e^{j\theta} h_i^{(-P)} \right|^2$$

et la valeur optimale de la rotation de phase θ est déterminée comme étant l'argument de la somme des produits conjugués, à savoir :

$$\theta = \arg\left( \sum_{i=0}^{L-1} h_i^{(N)} h_i^{(-P)*} \right)$$

Le procédé selon l'invention peut comporter au moins les étapes suivantes :

a) estimer les réponses impulsionnelles $h_0(t)$ et $h_1(t)$ des probes disposés de part et d'autre du bloc de données à analyser,
b) estimer la rotation de la phase, θ,
c) corriger la phase ou la fréquence du signal reçu, en opérant une rotation inverse sur le bloc de données et les probes,
d) estimer à nouveau, conjointement, les réponses impulsionnelles au moyen des probes modifiées,

e) appliquer un algorithme d'égalisation de blocs de données avec retour dans la boucle par exemple de type BDFE.

Le procédé est avantageusement utilisé pour la démodulation de signaux reçus dans un BDFE ou tout autre dispositif similaire.

L'invention concerne aussi un dispositif pour égaliser au moins un signal ayant traversé un canal de transmission, ledit signal comportant au moins un bloc de données et plusieurs probes situés de part et d'autre du bloc de données caractérisé en ce qu'il comporte au moins un moyen recevant les signaux et adapté à déterminer la rotation de phase θ du ou des signaux reçus, entre une première Probe (n-1) située avant le bloc de données et une deuxième Probe (n) disposée après le bloc de données, corriger la phase du signal reçu, estimer les réponses au moyen des probes ainsi modifiées et appliquer un algorithme d'égalisation de type BDFE.

L'objet de la présente invention offre notamment les avantages suivants :

■ il permet d'atteindre des performances requises notamment dans le cas de canaux de transmission très perturbés, à variations rapides, tout en n'augmentant que de façon négligeable la puissance de calcul requise;

■ par rapport à l'hypothèse de progression linéaire habituellement utilisée dans l'art antérieur, elle permet d'éliminer les résidus de décalage Doppler global mal compensé.

La présente invention sera mieux comprise à la lecture de la description qui suit d'un exemple de réalisation donné à titre illustratif et nullement limitatif en référence aux figures qui représentent :

• la figure 1 un exemple général de la structure des données de transmission à travers un canal de transmission,
• la figure 2 les étapes de l'algorithme BDFE utilisé selon l'art antérieur,
• la figure 3 les étapes mises en oeuvre par le procédé selon l'invention, et
• la figure 4 un exemple de schéma fonctionnel d'un dispositif selon l'invention.

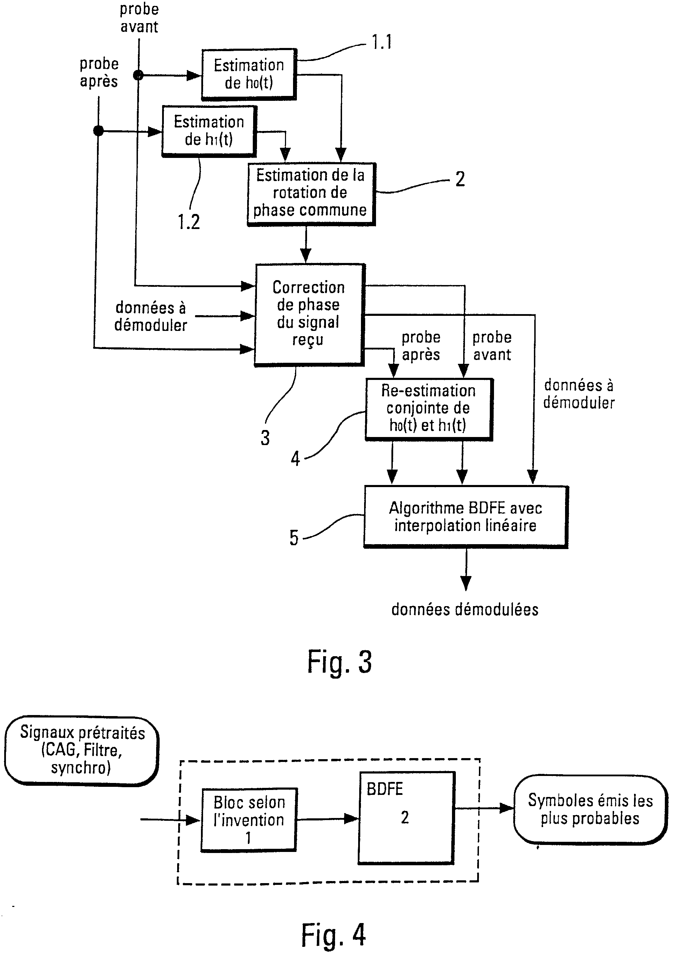

Le principe du procédé selon l'invention consiste notamment à exécuter les étapes schématisées, par exemple, à la figure 3 :

1 - estimer une première fois les réponses impulsionnelles du canal avant et après le bloc de données, probe avant estimation de $h_0(t)$, (1.1) et probe après estimation de $h_1(t)$, (1.2) sur la figure,
2 - estimer une rotation différentielle moyenne entre ces deux instants, $t_0$ et $t_1$ traduisant une rotation moyenne du signal dans l'intervalle de temps considéré, l'objectif étant de minimiser la différence entre les deux réponses impulsionnelles initiales, estimation de la rotation de phase commune (2),
3 - corriger localement la fréquence du signal reçu, afin d'optimiser les performances, par exemple effectuer la correction de phase du signal reçu, (3),
4 - estimer à nouveau et par exemple conjointement les réponses impulsionnelles $h_0(t)$ et $h_1(t)$ calculées lors de la première étape en tenant compte de l'évolution supposée du canal de l'une à l'autre, (4),
5 - exécuter l'algorithme BDFE ou un algorithme équivalent en utilisant les estimations conjointes des réponses impulsionnelles obtenues lors de la quatrième étape et les données à démoduler (5).

L'exemple qui suit est donné en référence à la figure 3 dans le cas non limitatif d'une application à un signal ayant une structure telle que schématisée à la figure 1.

Le procédé dans un premier temps réalise une première estimation par exemple séparée des deux réponses impulsionnelles correspondant respectivement aux deux probes (Probe n-1 et Probe n) situées de part et d'autre du bloc de données (bloc de données n) à évaluer.

• le procédé cherche la meilleure estimation des L échantillons de la réponse impulsionnelle du canal, notés $h_{0...L-1}$,
• le signal émis et connu est $d_0..d_{P-1}$ ($d_0$ correspond à $a_{-P}$ dans la probe avant et à $c_N$ dans la probe après ) et le signal reçu est $r_0...r_{P-1}$,
• h la réponse impulsionnelle du canal est estimée en minimisant par exemple l'erreur quadratique totale donnée par :

$$E = \sum_{n=N_0}^{N_1} \left| \sum_{m=0}^{L-1} d_{n-m} h_m - r_n \right|^2 \quad (1)$$

Pour que seuls les symboles connus interviennent (i.e. $d_0$ à $d_{P-1}$ seulement), on prend $N_0 = L - 1$ et $N_1 = P - 1$.

La minimisation de E conduit aux L équations suivantes :

$$\sum_{n=L-1}^{P-1} d_{n-p}^{*} \left[ \sum_{m=0}^{L-1} d_{n-m} h_{m} - r_{n} \right] = 0$$
$$p = 0...L - 1 \qquad (2)$$

qui peuvent se réécrire sous la forme (3) :

$$\sum_{m=0}^{L-1} h_{m} \left[ \sum_{n=L-1}^{P-1} d_{n-m} d_{n-p}^{*} \right] = \sum_{n=L-1}^{P-1} r_{n} d_{n-p}^{*}$$
$$p = 0...L - 1 \qquad (3)$$

ou encore (4) :

$$\sum_{m=0}^{L-1} A_{p,m} h_{m} = B_{p}$$
$$p = 0...L - 1$$

avec

$$A_{p,m} = \sum_{n=L-1}^{P-1} d_{n-m} d_{n-p}^{*} = A_{m,p}^{*}$$
$$m = 0...L - 1$$
$$p = 0...L - 1$$

et

$$B_{p} = \sum_{n=L-1}^{P-1} r_{n} d_{n-p}^{*}$$
$$p = 0...L - 1$$

La matrice A = {$A_{p,m}$} étant hermitienne, la solution du problème est rapidement trouvée par exemple en utilisant la décomposition L-U de Cholesky, bien connue de l'homme de l'art, où A = L U et :

- L est une matrice triangulaire inférieure n'ayant que des 1 sur la diagonale,
- U est une matrice triangulaire supérieure où les éléments de la diagonale sont réels.

En pratique, les matrices L et U sont par exemple précalculées et mémorisées dans une mémoire morte puisque la matrice A est formée à partir de valeurs constantes.

Formellement, on peut écrire que l'on doit avoir A h = B ou L U h = B. La résolution se fait en faisant intervenir un vecteur intermédiaire y, en résolvant d'abord L y = B puis U h = y.

**Estimation de la dérive instantanée ou rotation de phase à appliquer**

L'idée sur laquelle repose le procédé est d'utiliser une version de l'estimation conjointe qui commence par estimer un décalage Doppler global mal compensé, ce qui peut être le cas en présence d'une rampe Doppler.

C'est la raison pour laquelle le procédé utilise ici une version de l'estimation conjointe qui commence par estimer un tel décalage résiduel, à le pré-compenser ensuite et à mettre en oeuvre un algorithme d'égalisation de type BDFE.

Cette compensation consiste par exemple à dire que, entre la première probe Probe n-1 disposée avant le bloc de données à démoduler et la deuxième probe Probe n disposée après le bloc de données, il y a eu une rotation de phase globale égale à un certain angle $\theta$. Cette rotation totale moyenne est due, soit à un résidu de décalage en fréquence mal compensé, soit à un décalage instantané moyen en fréquence du au fait que la réponse impulsionnelle du canal fluctue au cours du temps.

On note $h^{(-P)}_{0...L-1}$ les valeurs de la réponse impulsionnelle h calculée au moyen de la première probe Probe n-1 qui commence à l'échantillon de rang -P, et $h^{(N)}_{0...L-1}$ les valeurs de la réponse impulsionnelle h calculée au moyen de la deuxième probe Probe n qui commence à l'échantillon de rang +N.

On estime la rotation moyenne $\theta$ entre ces deux réponses impulsionnelles en cherchant à minimiser la différence entre les deux réponses impulsionnelles extrêmes initiales calculées individuellement, ce qui aura pour effet de rendre « plus vraie » l'hypothèse de variation (par exemple linéaire) de ces réponses, la situation idéale correspondant au cas où ces deux réponses deviennent égales.

Plus explicitement, cette différence a une énergie égale à :

$$E = \sum_{i=0}^{L-1} \left| h_i^{(N)} - e^{j\theta} h_i^{(-P)} \right|^2 \tag{5}$$

$$E = \text{cste} - 2\,\text{Re}\left( e^{-j\theta} \sum_{i=0}^{L-1} h_i^{(N)} h_i^{(-P)*} \right) \tag{6}$$

La valeur optimale de la rotation de phase $\theta$ est déterminée comme étant l'argument de la somme des produits conjugués, à savoir :

$$\theta = \arg\left( \sum_{i=0}^{L-1} h_i^{(N)} h_i^{(-P)*} \right) \tag{7}$$

Cette valeur optimale correspond à la rotation totale moyenne qu'il faut corriger avant d'exécuter les étapes d'un algorithme d'égalisation, tel qu'un algorithme BDFE.

**Correction locale de fréquence du signal reçu**

Une fois estimée la valeur de la rotation moyenne $\theta$ correspondant à la valeur optimale précédemment mentionnée, le procédé comporte une étape où les échantillons de signal reçus originaux $r_n$ sont remplacés par leurs valeurs corrigées de ce doppler "local" et ce, pour la probe avant, Probe n-1, les données et la probe après, Probe n, c'est-à-dire pour n allant de -P à P + N - 1:

$$r_n \rightarrow e^{-j n \frac{\theta}{P+N}} r_n \tag{8}$$

Les étapes suivantes dans le procédé consiste à estimer à nouveau les deux réponses impulsionnelles correspondant à la Probe n-1 et à la Probe n et terminer en appliquant un algorithme d'égalisation par exemple le BDFE proprement dit.

**Estimation conjointe des deux réponses impulsionnelles**

L'hypothèse émise ici est que la réponse impulsionnelle du canal évolue "linéairement" entre les deux estimations.

On considère que le $j^{ème}$ (j = 0...L - 1) échantillon de la réponse impulsionnelle généralisée (variable au cours du temps) passe de $h_j^{(n0)}$ à un échantillon de position $n_0$, à $h_j^{(n1)}$ à un échantillon de position $n_1$.

Cette évolution est traduite par les L différences suivantes

$$dh_j^{(n0)} = \frac{h_j^{(n1)} - h_j^{(n0)}}{n1 - n0}$$

La valeur de l'échantillon $r_n$ reçu à la position n est alors donné par :

$$r_n = \sum_{j=0}^{L-1} \left[ h_j^{(n0)} + \frac{n - j - n_0}{n_1 - n_0} \left[ h_j^{(n1)} - h_j^{(n0)} \right] \right] e_{n-j} \qquad (10)$$

soit encore :

$$r_n = \frac{1}{n_1 - n_0} \sum_{j=0}^{L-1} \left[ \left[ n_1 - n + j \right] h_j^{(n0)} + \left[ n - j - n_0 \right] h_j^{(n1)} \right] e_{n-j} \qquad (11)$$

On connaît les symboles émis pour la probe Probe n-1 précédant le bloc de données à démoduler (les $a_i$) et ceux pour la probe Probe n le suivant (les $c_i$).

L'estimation conjointe des réponses impulsionnelles avant (relative à la position -P) et après (relative à la position N) va consister à minimiser l'erreur suivante (12):

$$(N + P)^2 E = \sum_{i=L-1-P}^{-1} \left| \sum_{j=0}^{L-1} a_{i-j} \left[ (N - i + j) h_j^{(-P)} + (i - j + P) h_j^{(N)} \right] - (N + P) r_i \right|^2$$

$$+ \sum_{i=N+L-1}^{N+P-1} \left| \sum_{j=0}^{L-1} c_{i-j} \left[ (N - i + j) h_j^{(-P)} + (i - j + P) h_j^{(N)} \right] - (N + P) r_i \right|^2$$

dans cet exemple tout a été multiplié par $(N + P)^2$

Pour clarifier le problème, on pose :

$$r_m^{NP} = (N + P) r_{m+L-1-P}$$

$$\text{si } m = 0...P - L$$

$$r_m^{NP} = (N+P) r_{m+N+2L-2-P}$$

$$\text{si } m = P - L + 1...2 P - 2 L + 1$$

$$h_k^{NP} = h_k^{(-P)}$$

$$\text{si } k = 0...L - 1$$

$$h_k^{NP} = h_{k-L}^{(N)}$$

$$si \ k = L...2L-1$$

$$a_{m,k}^{NP} = (N+P-L+1-m+k)\, a_{L-1-P+m-k}$$

$$si \ m = 0...P-L \ et \ k = 0...L-1$$

$$a_{m,k}^{NP} = (2(L-1)+1+m-k)\, a_{2(L-1)-P+m-k}$$

$$si \ m = 0...P-L \ et \ k = L...2L-1$$

$$a_{m,k}^{NP} = (P-2(L-1)-m+k)\, c_{N+2(L-1)-P+m-k}$$

$$si \ m = P-L+1...2P-2L+1 \ et \ k = O...L-1$$

$$a_{m,k}^{NP} = (N+3(L-1)+1+m-k)\, c_{N+3(L-1)-P+1+m-k}$$

$$si \ m = P-L+1...2P-2L+1 \ et \ k = L...2L-1$$

On a alors (13):

$$(N+P)^2 E = \sum_{m=0}^{2P-2L+1} \left| \sum_{k=0}^{2L-1} a_{m,k}^{NP} h_k^{NP} - r_m^{NP} \right|^2$$

L'annulation des dérivées donne les 2 L équations suivantes :

$$\sum_{k=0}^{2L-1} h_k^{NP} \left[ \sum_{m=0}^{2P-2L+1} a_{m,k}^{NP} a_{m,p}^{NP*} \right] = \sum_{m=0}^{2P-2L+1} r_m^{NP} a_{m,p}^{NP*}$$
$$p = 0...2L-1 \qquad (14)$$

$$\sum_{k=0}^{2L-1} A_{k,p}^{NP} h_k^{NP} = \sum_{m=0}^{2P-2L+1} r_m^{NP} a_{m,p}^{NP*}$$
$$p = 0...2L-1$$

avec

$$A_{k,p}^{NP} = \sum_{m=0}^{2P-2L+1} a_{m,k}^{NP} a_{m,p}^{NP*}$$
$$k = 0...2L-1$$
$$p = 0...2L-1$$

Ce système d'équations hermitien se résout par exemple en utilisant les méthodes habituellement connues de l'Homme du métier, et fournit les valeurs des deux réponses impulsionnelles recherchées, $h^{(-P)}$ (L premières inconnues) et h(N) (L dernières inconnues), valables respectivement au début de la probe avant les données et au début de la probe après les données.

En pratique, les matrices L et U déduites de $A^{NP}$ sont encore une fois précalculées (par exemple en mémoire morte) puisque la matrice $A^{NP}$ est formée à partir de valeurs constantes.

On montre alors que l'erreur quadratique totale (à un facteur multiplicatif constant près) vaut :

$$E_{min} = \sum_{m=0}^{2P-2L+1} |r_m^{NP}|^2 - \sum_{k=0}^{2L-1} A_{k,k}^{NP} |h_k^{NP}|^2$$
$$- 2\,Re\left( \sum_{k=0}^{2L-2} h_k^{NP} \sum_{j=k+1}^{2L-1} h_j^{NP*} A_{k,j}^{NP} \right) \tag{16}$$

Cette erreur quadratique peut être utilisée pour choisir la position d'échantillonnage pour laquelle elle est la plus faible, ce qui permet de faire un suivi fin de synchronisation.

L'étape suivante dans le procédé consiste à appliquer par exemple un algorithme BDFE avec interpolation.

## Algorithme BDFE avec interpolation

L'algorithme BDFE va consister à trouver les valeurs les plus probables pour les $b_i$, symboles de données inconnus.

Sachant qu'un échantillon $r_n$ s'exprime comme :

$$r_n = \frac{1}{P+N} \sum_{j=0}^{L-1} \left( |N-n+j| h_j^{(-P)} + |n-j+P| h_j^{(N)} \right) e_{n-j} \tag{17}$$

on utilise les notations suivantes pour plus de clarté :

$$h_j = h_j^{(-P)}$$
$$dh_j = \frac{h_j^{(N)} - h_j^{(-P)}}{P+N}$$

si bien que $r_n$ peut être ré-écrit :

$$r_n = \sum_{j=0}^{L-1} e_{n-j} \left( h_j + (n-j+P) dh_j \right) \tag{18}$$

Le procédé élimine dans un premier temps le signal influencé par les $b_i$ et la part due aux probes avant (Probe n-1) et après (Probe n).

Les échantillons $r_n$ sont alors remplacés par les valeurs corrigées $r_n{}^c$ définies par les trois expressions suivantes (19):

$$r_i^c = r_i - \sum_{j=i+1}^{L-1} a_{i-j} \left[ h_j + (i - j + P) \, dh_j \right]$$
$$i = 0 ... L - 2$$

$$r_i^c = r_i$$

$$i = L - 1 .... N - 1$$

$$r_i^c = r_i - \sum_{j=0}^{i-N} c_{i-j} \left[ h_j + (i - j + P) \, dh_j \right]$$
$$i = N ... N + L - 1$$

Les symboles reçus ne dépendent alors plus que des $b_i$, soit :

$$r_i^c = \sum_{j=MAX[0, i-N+1]}^{MIN[i, L-1]} b_{i-j} \left[ h_j + (i - j + P) \, dh_j \right]$$
$$i = 0 ... N + L - 1 \qquad (20)$$

On pose alors, pour simplifier encore :

$$h_{j,i} = h_j + (i + P) \, dh_j$$

($j^{ème}$ échantillon de la réponse impulsionnelle du canal à l'arrivée du symbole i, sachant qu'elle valait $h_0...h_{L-1}$ au symbole -P)
On peut alors écrire :

$$r_i^c = \sum_{k=MAX[0, i-L+1]}^{MIN[N-1, i]} b_k \, h_{i-k, k}$$
$$i = 0 ... N + L - 1 \qquad (21)$$

Ceci permet d'obtenir simplement les $b_i$, en minimisant la quantité :

$$E = \sum_{i=0}^{N+L-1} \left| \sum_{k=MAX[0, i-L+1]}^{MIN[N-1, i]} b_k \, h_{i-k, k} - r_i^c \right|^2 \qquad (22)$$

On doit alors résoudre le système de N équations suivant :

$$\sum_{i=0}^{N+L-1} h^*_{i-m,m} \left( \sum_{k=MAX(0,i-L+1)}^{MIN(N-1,i)} b_k h_{i-k,k} - r^c_i \right) = 0$$

$$m = 0...N-1 \tag{23}$$

soit :

$$\sum_{k=MAX(0,m-L+1)}^{k=MIN(N-1,m+L-1)} b_k \sum_{i=MAX(k,m)}^{i=MIN(k+L-1,m+L-1)} h_{i-k,k} h^*_{i-m,m}$$

$$= \sum_{i=m}^{L+m-1} r^c_i h^*_{i-m,m}$$

$$m = 0...N-1$$

Coefficient de $b_k$ dans l'équation m :

$$B_{m,k} = \sum_{i=MAX(k,m)}^{i=MIN(k+L-1,m+L-1)} h_{i-k,i} h^*_{i-m,i} \tag{24}$$

On peut simplifier le problème par itération, en ne considérant que la partie supérieure de la matrice B. En effet, on montre, la relation de récurrence suivante :

$$B_{k,k+p} = B_{k-1,k-1+p} + F_p + (2k-1)G_p$$

$$G_p = \sum_{q=0}^{q=L-1-p} dh^*_{q+p} dh_q \quad \text{(note : } G_0 \text{ réel)}$$

$$F_p = (p+2P)G_p + \sum_{q=0}^{q=L-1-p} dh_q h^*_{q+p} + dh^*_{q+p} h_q \quad \text{(note : } F_0 \text{ réel)}$$

$$p = 0...L-1 \tag{25}$$

Pour éviter des problèmes de précision de calcul, il est préférable de calculer d'abord les coefficients $B_{0,0...L-1}$, puis les suivants, par la relation :

$$B_{0,p} = \sum_{i=p}^{i=L-1} (h_{i-p} + (p+P) dh_{i-p})(h^*_i + P dh^*_i)$$

$$= \sum_{q=0}^{L-1-p} (h_q + (p+P) dh_q)(h^*_{p+q} + P dh^*_{p+q}) \quad \text{(note : } B_{0,0} \text{ réel)}$$

$$p = 0...L-1 \tag{26}$$

$$B_{k,k+p} = B_{0,p} + k\,F_p + k^2 G_p$$

$$k = 1...N-1$$

Ceci permet, une fois que la première ligne de B a été calculée, de calculer les lignes suivantes par décalage d'une ligne, d'une colonne, et modification simple.

Pour améliorer la précision de calcul (surtout en virgule fixe), on peut aussi utiliser les formules (exactes) suivantes pour p = 0...L - 1 :

$$B_0 = B_{0,p}$$

$$B_1 = B_{\frac{N}{2},\frac{N}{2}} + p$$

$$B_2 = B_{N,\,N+p}$$

(en fait, $B_2$ n'existe normalement pas puisque ses indices sont hors limites)

Ces trois quantités sont toutes du même ordre de grandeur, ce qui évite des problèmes de recadrage dans une mise en oeuvre sur un processeur travaillant en virgule fixe.

On fait ensuite, pour toutes les valeurs de p, à savoir p = 0... L - 1 :

$$a_{p,0} = B_0$$

$$a_{p,1} = -3B_0 + 4\,B_1 - B_2$$

$$a_{p,2} = 2\,(B_0 - 2B_1 + B_2)$$

et finalement, pour m = 0...N - 1 :

$$B_{m,m} + p = a_{p,0} + X(a_{p,1} + x\,a_{p,2})$$

avec

$$x = \frac{m}{N}$$

On notera que la quantité x est un nombre compris entre 0 et 1, ce qui facilite les calculs.

La matrice B calculée ici est de la forme :

$$
B = \begin{vmatrix}
B_{0,0} & B_{0,1} & \ddots & B_{0,L-1} & 0 & 0 & 0 \\
B_{0,1}^{*} & B_{1,1} & B_{1,2} & \ddots & B_{1,L} & 0 & 0 \\
\ddots & B_{1,2}^{*} & B_{2,2} & B_{2,3} & \ddots & \ddots & 0 \\
B_{0,L-1}^{*} & \ddots & B_{2,3}^{*} & B_{3,3} & B_{3,4} & \ddots & B_{N-L,N-1} \\
0 & B_{1,L}^{*} & \ddots & B_{3,4}^{*} & B_{4,4} & \ddots & \ddots \\
0 & 0 & B_{2,L+1}^{*} & \ddots & \ddots & \ddots & B_{N-2,N-1} \\
0 & 0 & 0 & B_{N-L,N-1}^{*} & \ddots & B_{N-2,N-1}^{*} & B_{N-1,N-1}
\end{vmatrix}
$$

La décomposition L-U va donner deux matrices L et U de la forme :

$$
U = \begin{vmatrix}
u_{0,0} & u_{0,1} & \ddots & u_{0,L-1} & 0 & 0 & 0 \\
0 & u_{1,1} & u_{1,2} & \ddots & u_{1,L} & 0 & 0 \\
0 & 0 & u_{2,2} & u_{2,3} & \ddots & \ddots & 0 \\
0 & 0 & 0 & u_{3,3} & u_{3,4} & \ddots & u_{N-L,N-1} \\
0 & 0 & 0 & 0 & u_{4,4} & \ddots & \ddots \\
0 & 0 & 0 & 0 & 0 & \ddots & u_{N-2,N-1} \\
0 & 0 & 0 & 0 & 0 & 0 & u_{N-1,N-1}
\end{vmatrix}
$$

$$
L = \begin{vmatrix}
1 & 0 & 0 & 0 & 0 & 0 & 0 \\
1_{1,0} & 1 & 0 & 0 & 0 & 0 & 0 \\
\ddots & 1_{2,1} & 1 & 0 & 0 & 0 & 0 \\
1_{L-1,0} & \ddots & 1_{3,2} & 1 & 0 & 0 & 0 \\
0 & 1_{L,1} & \ddots & 1_{4,3} & 1 & 0 & 0 \\
0 & 0 & 1_{L+1,2} & \ddots & \ddots & \ddots & 0 \\
0 & 0 & 0 & 1_{N-1,N-L} & \ddots & 1_{N-1,N-2} & 1
\end{vmatrix}
$$

Comme

- la matrice B, bien que de grandes dimensions, ne contient que peu d'éléments non nuls
- la matrice B est hermitienne (il est donc inutile de calculer son triangle inférieur, par exemple)
- une fois les matrices L et U calculées, la matrice B n'est plus utilisée
- on peut organiser les calculs de telle sorte que les éléments de L et U remplacent progressivement les éléments de B dans la même zone mémoire,
  on range B en mémoire dans une matrice unique de dimensions N x (2 L - 1) de la façon suivante (la partie à gauche de la colonne centrale n'est pas calculée) :

$$B = \begin{vmatrix} 0 & 0 & 0 & B_{0,0} & B_{0,1} & \cdots & B_{0,L-1} \\ 0 & 0 & \lfloor B_{0,1}^* \rfloor & B_{1,1} & B_{1,2} & \cdots & B_{1,L} \\ 0 & \ddots & \lfloor B_{1,2}^* \rfloor & B_{2,2} & \cdots & B_{2,3} & \vdots \\ \lfloor B_{0,L-1}^* \rfloor & \cdots & \lfloor B_{2,3}^* \rfloor & B_{3,3} & B_{3,4} & \cdots & B_{N-L,N-1} \\ \lfloor B_{1,L}^* \rfloor & \cdots & \lfloor B_{3,4}^* \rfloor & B_{4,4} & \cdots & \ddots & 0 \\ \vdots & \cdots & \cdots & \vdots & B_{N-2,N-1} & 0 & 0 \\ \lfloor B_{N-L,N-1}^* \rfloor & \cdots & \lfloor B_{N-2,N-1}^* \rfloor & B_{N-1,N-1} & 0 & 0 & 0 \end{vmatrix}$$

Lors de la décomposition L-U, la même zone mémoire est utilisée et son contenu, à la fin de la décomposition, est le suivant (rappel : la diagonale de L ne contient que des 1 et n'a donc pas besoin d'être mémorisé) :

$$LU = \begin{vmatrix} 0 & 0 & 0 & U_{0,0} & U_{0,1} & \cdots & U_{0,L-1} \\ 0 & 0 & L_{0,1} & U_{1,1} & U_{1,2} & \cdots & U_{1,L} \\ 0 & \ddots & L_{1,2} & U_{2,2} & \cdots & U_{2,3} & \vdots \\ L_{0,L-1} & \cdots & L_{2,3} & U_{3,3} & U_{3,4} & \cdots & U_{N-L,N-1} \\ L_{1,L} & \cdots & L_{3,4} & U_{4,4} & \cdots & \ddots & 0 \\ \vdots & \cdots & \cdots & \vdots & U_{N-2,N-1} & 0 & 0 \\ L_{N-L,N-1} & \cdots & L_{N-2,N-1} & U_{N-1,N-1} & 0 & 0 & 0 \end{vmatrix}$$

La figure 4 schématise un exemple de structure d'un dispositif selon l'invention. Le ou les signaux préconditionnés après passage dans un ensemble de dispositifs habituellement utilisés et comportant des filtres adaptés, un CAG (contrôle automatique de gain, ...) et tous les dispositifs permettant le préconditionnement est transmis par exemple à un microprocesseur 1 pourvu d'un logiciel conçu pour exécuter les différentes étapes mentionnées ci-dessus. Les résultats obtenus sont ensuite transmis à un algorithme BDFE, 2, permettant d'obtenir les symboles émis les plus probables, selon une méthode connue de l'Homme du métier.

**Revendications**

1. Procédé d'égalisation d'un signal reçu par un récepteur, ledit signal comportant au moins une séquence de données connue (ou probe) et un bloc de données situé entre une première probe Probe n-1 et une deuxième probe Probe n **caractérisé en ce qu'**il comporte au moins une étape d'estimation entre le début du bloc de données et la fin du bloc de données de la rotation de phase $\theta$ du signal reçu.

2. Procédé selon la revendication 1 **caractérisé en ce qu'**il estime la rotation de phase entre la première probe Probe n-1 disposée avant le bloc de données à démoduler et la deuxième probe Probe n disposée après le bloc de données à démoduler.

3. Procédé selon l'une des revendications 1 et 2 **caractérisé en ce qu'**il comporte une étape d'estimation de la réponse impulsionnelle du canal de transmission en utilisant la première Probe n-1 et de la réponse impulsionnelle du canal de transmission en utilisant la deuxième Probe n et une étape où l'on minimise la différence entre ces deux valeurs estimées.

4. Procédé selon la revendication 3 **caractérisé en ce que** la différence entre les valeurs estimées de réponse impulsionnelle du canal s'exprime sous la forme :

$$E = \sum_{i=0}^{L-1} \left| h_i^{(N)} - e^{j\theta} h_i^{(-P)} \right|^2$$

et **en ce que** la valeur optimale de la rotation de phase $\theta$ est déterminée comme étant l'argument de la somme des produits conjugués, à savoir :

$$\theta = \arg\left( \sum_{i=0}^{L-1} h_i^{(N)} h_i^{(-P)*} \right)$$

**5.** Procédé selon l'une des revendications 1 et 2 **caractérisé en ce qu'**il comporte au moins les étapes suivantes :

a) estimer les réponses impulsionnelles $h_0(t)$ et $h_1(t)$ des probes disposés de part et d'autre du bloc de données à analyser,
b) estimer la rotation de la phase, $\theta$,
c) corriger la phase ou la fréquence du signal reçu, en opérant une rotation inverse sur le bloc de données et les probes,
d) estimer à nouveau, conjointement, les réponses impulsionnelles au moyen des probes modifiées,
e) appliquer un algorithme d'égalisation de blocs de données avec retour dans la boucle (BDFE).

**6.** Utilisation du procédé selon l'une des revendications 1 à 5 à la démodulation de signaux reçus dans un BDFE.

**7.** Dispositif pour égaliser au moins un signal ayant traversé un canal de transmission, ledit signal comportant au moins un bloc de données et plusieurs probes situés de part et d'autre du bloc de données **caractérisé en ce qu'**il comporte au moins un moyen recevant les signaux et adapté à déterminer la rotation de phase $\theta$ du ou des signaux reçus, entre une première Probe (n-1) située avant le bloc de données et une deuxième Probe (n) disposée après le bloc de données, corriger la phase du signal reçu, estimer les réponses au moyen des probes ainsi modifiées et appliquer un algorithme d'égalisation de type BDFE.

| Probe | Données libres | Probe | Données libres | Probe |
|:-----:|:--------------:|:-----:|:--------------:|:-----:|
| n-1 | n | n | n+1 | n+1 |

## Fig. 1

probe avant
P(n-1)

données à démoduler
N

probe après
P(n)

L    L    L    L

signal reçu
pour la probe
avant

signal reçu
pour la probe
après

données utilisées pour la démodulation
N+L-1

$h_0(t)$

$h_1(t)$

## Fig. 2

probe
avant

probe
après

Estimation
de h₀(t) — 1.1

Estimation
de h₁(t)

1.2

Estimation de la
rotation de
phase commune — 2

données à
démoduler

Correction
de phase
du signal
reçu

3

probe
après

probe
avant

données à
démoduler

Re-estimation
conjointe de
h₀(t) et h₁(t)

4

Algorithme BDFE avec
interpolation linéaire

5

données démodulées

## Fig. 3

Signaux prétraités
(CAG, Filtre,
synchro)

Bloc selon
l'invention
1

BDFE
2

Symboles émis les
plus probables

## Fig. 4

**Office européen des brevets**

**RAPPORT DE RECHERCHE EUROPEENNE**

Numéro de la demande

EP 02 29 2904

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 1 052 820 A (LUCENT TECHNOLOGIES INC) 15 novembre 2000 (2000-11-15) | 1-4 | H04L25/02 H04L27/00 |
| A | * page 7, ligne 52 - page 8, ligne 21 * * page 11, ligne 31 - page 12, ligne 25 * * page 13, ligne 28 - ligne 47 * * figures 16,17 * --- | 5-7 | |
| X | US 6 097 770 A (SARRAF MOHSEN  ET AL) 1 août 2000 (2000-08-01) | 1-3,6 | |
| A | * abrégé * * colonne 5, ligne 20 - ligne 28 * * colonne 6, ligne 62 - ligne 64 * * figures 4,8 * --- | 4,5,7 | |
| A | WO 00 54431 A (NOKIA NETWORKS OY ;PIIRAINEN OLLI (FI)) 14 septembre 2000 (2000-09-14) * page 5, ligne 8 - page 9, ligne 3 * * figures 1,2 * ----- | 1,2,6 | |

DOMAINES TECHNIQUES RECHERCHES (Int.Cl.7)

H04L

Le présent rapport a été établi pour toutes les revendications

| Lieu de la recherche | Date d'achèvement de la recherche | Examinateur |
|---|---|---|
| LA HAYE | 21 janvier 2003 | Marselli, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**    EP 02 29 2904

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-01-2003

| Document brevet cité au rapport de recherche | | Date de publication | Membre(s) de la famille de brevet(s) | | Date de publication |
|---|---|---|---|---|---|
| EP 1052820 | A | 15-11-2000 | EP | 1052820 A1 | 15-11-2000 |
| | | | AU | 3829400 A | 21-11-2000 |
| | | | WO | 0069138 A1 | 16-11-2000 |
| US 6097770 | A | 01-08-2000 | AUCUN | | |
| WO 0054431 | A | 14-09-2000 | WO | 0054431 A1 | 14-09-2000 |
| | | | AU | 2729499 A | 28-09-2000 |
| | | | BR | 9917206 A | 17-09-2002 |
| | | | DE | 69903585 D1 | 21-11-2002 |
| | | | EP | 1159790 A1 | 05-12-2001 |

EPO FORM P0460

Pour tout renseignement concernant cette annexe : voir Journal Officiel de l'Office européen des brevets, No.12/82